# EUROPEAN PATENT SPECIFICATION

(11) **EP 3 256 812 B1**
(45) Date of publication and mention of the grant of the patent: **16.10.2019**
(21) Application number: 15882157.9
(22) Date of filing: 02.12.2015
(51) Int. Cl.: G01B 21/30, G01P 15/00, G01B 21/32, B61L 23/04, B61L 25/02, G01B 5/28

(54) **APPARATUS FOR MEASURING SURFACE ROUGHNESS OF RAIL USING ACCELERATION SENSOR AND DISPLACEMENT SENSOR**
VORRICHTUNG ZUR MESSUNG DER OBERFLÄCHENRAUHIGKEIT VON SCHIENEN UNTER VERWENDUNG VON BESCHLEUNIGUNGSSENSOR UND WEGSENSOR
APPAREIL DE MESURE DE RUGOSITÉ DE SURFACE DE RAIL UTILISANT UN CAPTEUR D'ACCÉLÉRATION ET UN CAPTEUR DE DÉPLACEMENT

(30) Priority: 09.02.2015 KR 20150019588
(43) Date of publication of application: 20.12.2017
(73) Proprietor: Korea Railroad Research Institute, Uiwang-si, Gyeonggi-do 437-757 (KR)
(72) Inventor: JEONG, Woo Tae, Suwon-si Gyeonggi-do 16365 (KR); JANG, Seung Ho, Gunpo-si Gyeonggi-do 15875 (KR); KOH, Hyo In, Suwon-si Gyeonggi-do 16687 (KR)
(74) Representative: Jaeger, Michael David
(86) International application number: PCT/KR2015/013078
(87) International publication number: WO 2016/129795

(56) References cited:
- DE-A1- 3 913 159
- JP-A- 2012 018 059
- JP-A- 2012 251 840
- JP-A- 2012 251 840
- KR-B1- 101 282 150
- US-A1- 2002 007 562
- US-B1- 6 564 467
- PARK ET AL.: 'Measurement and Analysis of Acoustic Rail Roughness With an Acceleration Sensor' KOREAN SOCIETY OF MECHANICAL ENGINEERS, ANNUAL FALL CONFERENCE November 2014, pages 2421 - 2422, XP009504459

## Description

### Technical Field

The present disclosure relates to an apparatus for measuring surface roughness of a rail while moving along the railway. Particularly, the present disclosure relates to an apparatus for automatically measuring surface roughness of a rail, which may measure accurate surface roughness of a rail without noise or error caused by vibrations generated while moving along the rail, by using an acceleration sensor installed in a cantilever manner. More particularly, the present disclosure relates to an apparatus for automatically measuring surface roughness of a rail, which may further improve reliability and accuracy of surface roughness measurement results of a rail by using a plurality of displacement sensors whose location may be adjusted.

### Background Art

Roughness of a surface of a rail which comes into contact with wheels is very important for running stability of a vehicle which runs along the rail. In particular, in case of railroad rail along which a train runs, the surface roughness of a rail has a direct influence on train rolling noise. Therefore, it is very important that the surface roughness of a rail is maintained within a regulated range. In addition, for maintenance of the surface roughness of a rail, it is required to accurately measure the surface roughness of a rail.

Since a rail extends long, when measuring the surface roughness of a rail, it is required to move an apparatus for measuring the surface roughness along the rail. However, while the apparatus for measuring surface roughness is moving, vibration may be generated in a direction perpendicular to the rail surface, and therefore, a measurement error and noise signal caused by vertical vibration or the like should be filtered out in order to enhance reliability of the roughness measurement.

JP 2012 251840 A describes a rail unevenness measurement device for continuously measuring the unevenness of a rail along the longitudinal direction of the rail. The device includes a measurement vehicle capable of traveling a measurement rail, a distance sensor which measures a travel distance of the measurement vehicle, and a displacement sensor group comprising first, second, and third displacement sensors which are fitted to the measurement vehicle and arranged in series in order at irregular intervals in the longitudinal direction of the measurement rail, at least one of the first, second, and third displacement sensors being changeable in position.

### Disclosure of Invention

### Technical Problem

The present disclosure is directed to providing an apparatus for measuring surface roughness of a rail, which may automatically measure surface roughness of a rail while moving along the rail and also may propose roughness measurement results with excellent accuracy and reliability by filtering errors of measurement and noise signals caused by vertical vibrations due to any reason irrelevant to the surface roughness of the rail while the apparatus is running.

In addition, the present disclosure is directed to providing an apparatus for measuring surface roughness of a rail, which may measure vertical displacements at various locations on the rail surface.

### Solution to Problem

The present invention is defined by the features of claim 1.

Furthermore, it is disclosed an apparatus for measuring surface roughness of a rail, which includes: an automatic traveling platform configured to move in a longitudinal direction along a rail; a cantilever beam having a fixed end fixed to the traveling platform and a movable end extending in the longitudinal direction; a contact member provided at the movable end of the cantilever beam to always make contact with a top surface of the rail; an acceleration sensor provided at the movable end of the cantilever beam at a location opposite to the contact member to measure vertical acceleration based on a vertical displacement of the contact member; and a displacement sensor configured to have a lower end which contacts the top surface of the rail to measure vertical displacement caused by the unevenness of the surface of the rail while the apparatus is running along the rail, wherein the cantilever beam is located to face the surface of the rail, the contact member and the displacement sensor move along the rail in a state where a lower portion of the contact member and a lower end of the displacement sensor are in contact with the top surface of the rail, the acceleration sensor measures vertical acceleration of the contact member generated in a vertical direction due to the irregularities of the top surface of the rail so that surface roughness of the rail is measured from an acceleration signal measured by the acceleration sensor, and surface roughness of the rail is measured from a vertical displacement due to the irregularities of the top surface of the rail, measured by the displacement sensor.

In this apparatus for measuring surface roughness according to the present disclosure, a plurality of displacement sensors are arranged in a row to configure a displacement sensor set, and the displacement sensor set is rotatably provided at the traveling platform so that the displacement sensors are arranged with an angle with respect to a longitudinal direction of the center of the rail, wherein a horizontally installed plate is provided at the travelling platform, wherein a coupling hole and a rotation slot are formed through the horizontally installed plate, wherein one of the plurality of displacement sensors of the displacement sensor set, arranged in a row, corresponds to a rotation center displacement sensor which is coupled through the coupling hole of the horizontally installed plate, and wherein the displacement sensor set, a displacement sensor adjacent to the rotation center displacement sensor is inserted through the rotation slot so that the displacement sensor set is coupled to be rotatable with respect to the horizontally installed plate. Further, the displacement sensor set may be coupled to the traveling platform to change a location thereof in a lateral direction.

### Advantageous Effects of Invention

The apparatus for measuring surface roughness of a rail automatically measures surface roughness of a rail while moving along the rail, and measures vertical acceleration according to vertical movements to measure surface roughness of the rail based on the measurement results. Thus, it is possible to exclude measurement errors and noise signals caused by vibrations perpendicular to the rail surface due to any reason such as shaking, vibrations or the like irrelevant to the surface roughness of the rail, during running or measuring. Therefore, according to the present disclosure, the surface roughness of a rail may be measured with excellent accuracy and reliability.

In addition, the apparatus for measuring surface roughness according to the present disclosure may directly measure a vertical displacement caused by surface roughness of a rail, and it is possible to further enhance accuracy and reliability of the finally calculated surface roughness measurement results of the rail by using the vertical displacement.

In particular, in the present disclosure, a displacement sensor for directly measuring a vertical displacement caused by surface roughness of a rail is included, and a plurality of displacement sensors is arranged in a raw to configure a "displacement sensor set". In addition, in the present disclosure, a configuration for rotating the displacement sensor set or moving the displacement sensor set in a lateral direction is included. Therefore, in the present disclosure, the displacement sensors may be disposed at various locations of the rail surface, and the surface roughness of a rail may be measured at desired locations accordingly. In addition, in the present disclosure, since a plurality of displacement sensors is arranged in a row in a longitudinal direction of the rail, it is possible to obtain a plurality of measurement data at the same location. Therefore, according to the present disclosure, accuracy and reliability of the surface roughness measurement results may be further improved.

### Brief Description of Drawings

Fig. 1 is a schematic diagram showing that an apparatus for measuring surface roughness of a rail according to the present disclosure measures surface roughness of a rail.
Figs. 2 to 4 are schematic perspective views showing the apparatus for measuring surface roughness according to an embodiment of the present disclosure, observed in different directions.
Figs. 5 and 6 are schematic perspective views showing the apparatus for measuring surface roughness according to the present disclosure, from which a side frame of a traveling platform is excluded, observed in different directions.
Fig. 7 is a schematic perspective view of Fig. 5, from which a power transmission belt for driving the traveling platform is excluded.
Fig. 8 is a lateral sectional view of Fig. 7, observed in a lateral direction.
Fig. 9 is an enlarged perspective view schematically showing circular portion A of Fig. 5, to illustrate a displacement sensor installed at the apparatus for measuring surface roughness according to the present disclosure.
Figs. 10 to 14 are plane views schematically showing circular portion B of Fig. 2, observed downwards, which illustrates the change of a rotation location of the displacement sensor set at the apparatus for measuring surface roughness according to the present disclosure.
Figs. 15 and 16 are perspective views schematically showing that the apparatus for measuring surface roughness according to the present disclosure is installed at a rail, observed in different directions.
Fig. 17 is a lateral sectional view, taken along the line D-D of Fig. 15.
Figs. 18 and 19 are perspective views schematically showing that an apparatus for measuring surface roughness according to another embodiment of the present disclosure, which further includes an auxiliary travel device, is installed at a rail, observed in different directions.

### Best Mode for Carrying out the Invention

Hereinafter, the embodiments of the present disclosure will be described in detail with reference to accompanying drawings. Though the present disclosure is described based on the embodiments depicted in the drawings, they are just examples, and the technical features, essential configurations and operations of the present disclosure are not limited thereto.

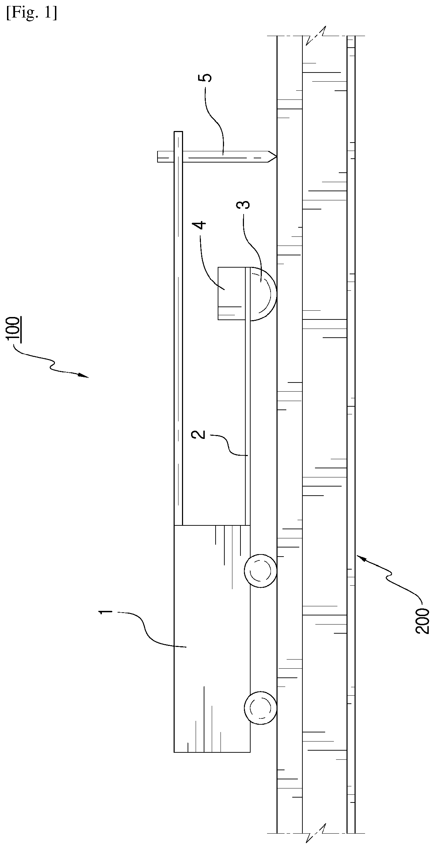

Fig. 1 is a schematic diagram showing an apparatus for measuring surface roughness of a rail (hereinafter, also referred to as a "surface roughness measuring apparatus") 100 according to the present disclosure, which measures surface roughness of a rail 200. Fig. 1 shows the surface roughness measuring apparatus 100 according to the present disclosure, which is observed in a lateral direction of the rail.

As shown in Fig. 1, the surface roughness measuring apparatus 100 of the present disclosure includes a traveling platform 1, a cantilever beam 2, a contact member 3 contacting a top surface of the rail 200, an acceleration sensor 4 and displacement sensors 5. Even though Fig. 1 shows just a single displacement sensor 5 for convenience, a plurality of displacement sensors 5 are provided as a set, as described later.

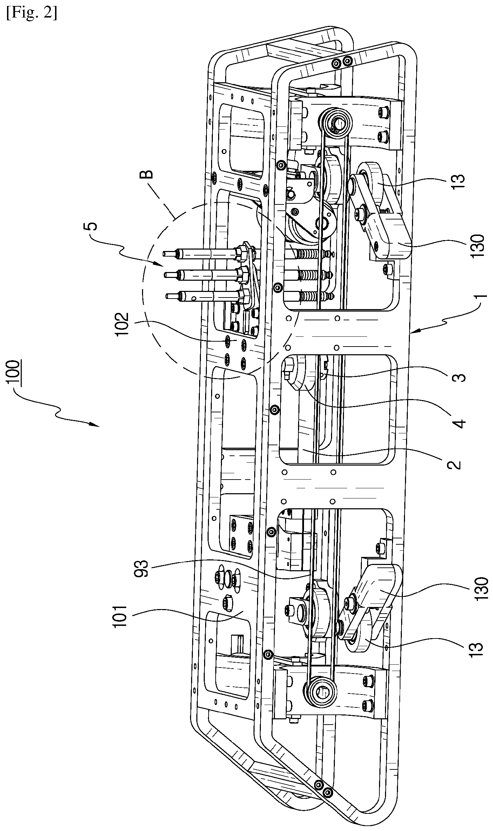

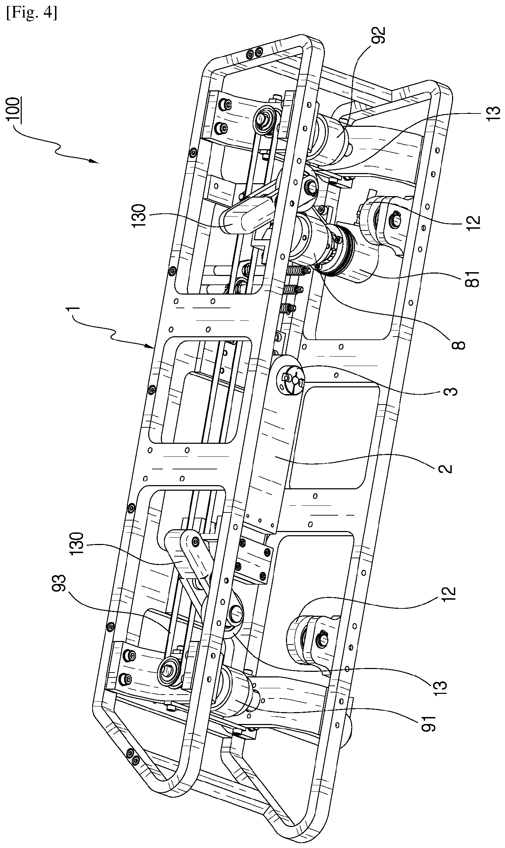

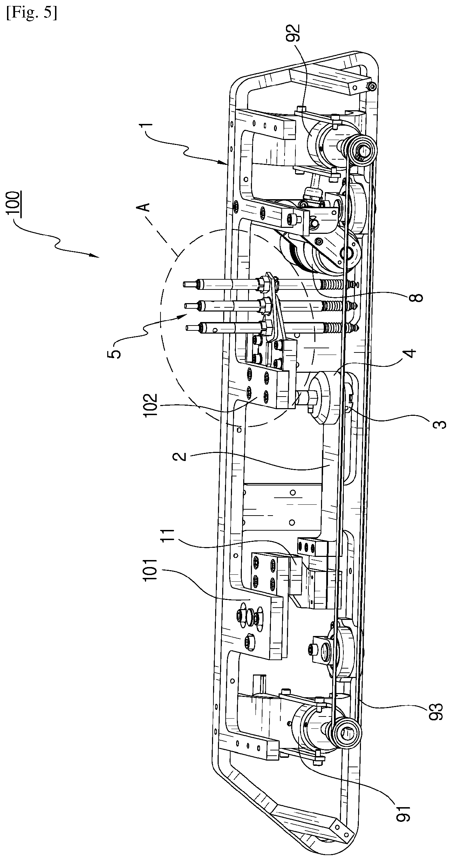

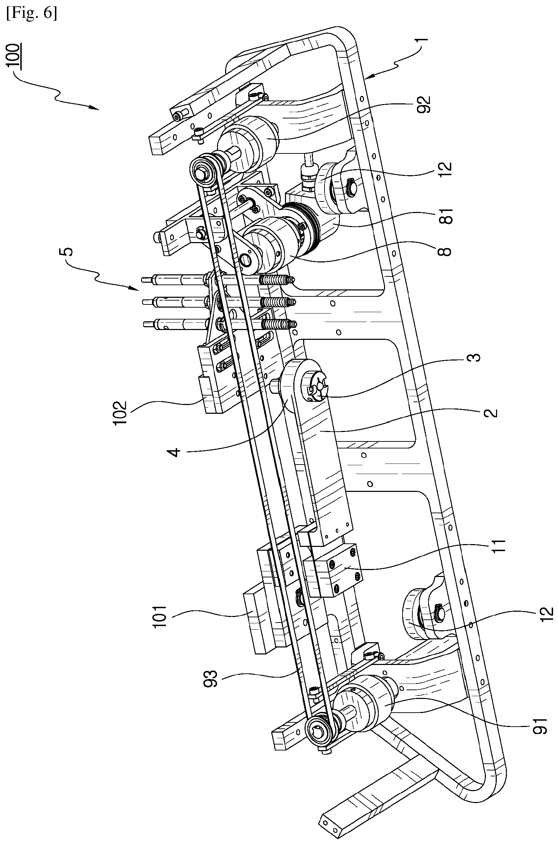

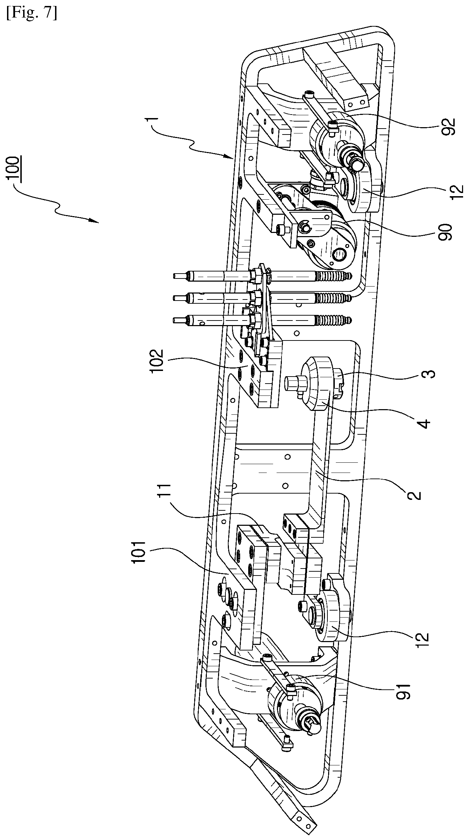

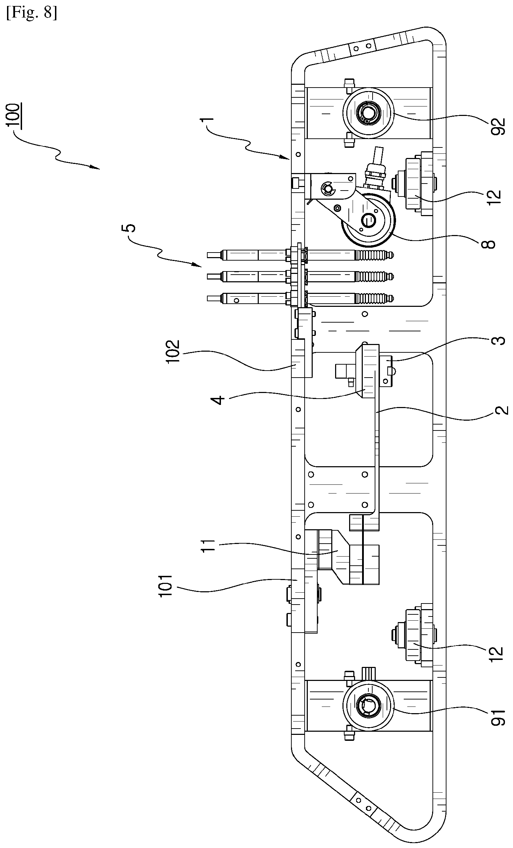

Figs. 2 to 4 are schematic perspective views showing the surface roughness measuring apparatus 100 according to an embodiment of the present disclosure, observed in different directions. In particular, Fig. 4 shows the surface roughness measuring apparatus 100 according to the present disclosure, observed upwards. Figs. 5 and 6 are schematic perspective views showing the surface roughness measuring apparatus 100 according to the present disclosure, from which a side frame of the traveling platform 1 is excluded to show an inner configuration of the traveling platform 1, observed in different directions. Here, Fig. 5 is a diagram observed downwards, and Fig. 6 is a diagram observed upwards. Fig. 7 is a schematic perspective view of Fig. 5, from which a power transmission belt 93 for driving the traveling platform 1 is excluded, and Fig. 8 is a lateral sectional view of Fig. 7, observed in a lateral direction.

The traveling platform 1 is loaded on the rail 200 and moves in a longitudinal direction (a direction in which the rail extends) along the rail 200. In this embodiment depicted in the figures, the traveling platform 1 is configured to move by wheels. In the embodiment depicted in Figs. 2 to 8, the surface roughness measuring apparatus 100 is configured to move along the rail 200 by means of its own power. In order to configure the surface roughness measuring apparatus 100 to move by itself, a driving device 81 such as a motor is provided to the traveling platform 1, and the driving wheel 8 is driven by the driving device 81. The driving wheel 8 rolls along the top surface of the rail 200. In the embodiment depicted in the figures, a first driven wheel 91 and a second driven wheel 92 are further provided with an interval in a longitudinal direction from the driving wheel 8. In particular, in the embodiment depicted in the figures, a band-type power transmission belt 93 is coupled to the first driven wheel 91 and the second driven wheel 92. Therefore, the first driven wheel 91 and the second driven wheel 92 work together. Such wheels, namely the driving wheel 8, the first driven wheel 91 and the second driven wheel 92 are installed to operate in close contact with the top surface of the rail 200.

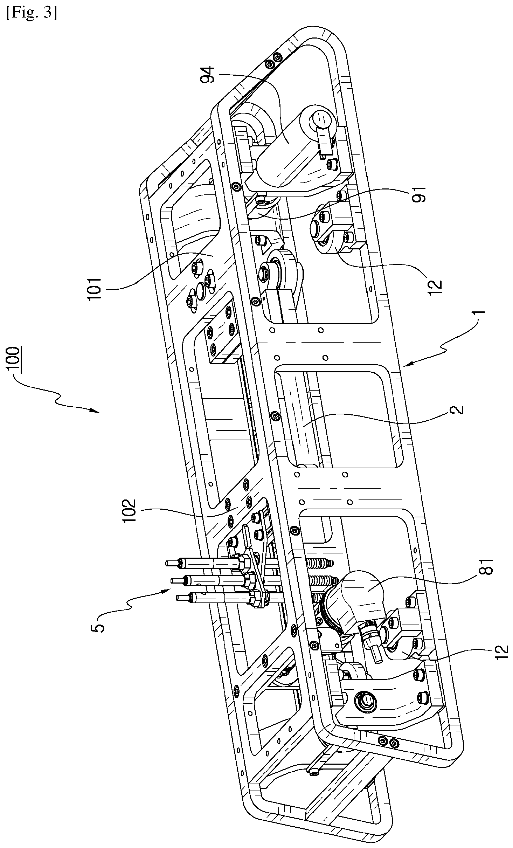

If necessary, a travel distance measurer 94 for measuring a travel distance of the surface roughness measuring apparatus 100 may be provided. In the embodiment depicted in the figures, a rotary-type encoder device capable of measuring RPM of the first driven wheel 91 is provided as the travel distance measurer 94 (see Fig. 3). However, in the present disclosure, the rotary-type encoder device is just an example of the travel distance measurer 94. The travel distance measurer 94 is an optional component which may be installed as necessary, and the travel distance measurer 94 may also be coupled to the second driven wheel 92, instead of the first driven wheel 91.

In the present disclosure, the configuration for moving the traveling platform 1 by itself is not limited to the embodiment using the driving wheel 8 and the first and second driven wheels 91, 92 as described above. In addition, the traveling platform 1 may also be configured so that an auxiliary travel device having a driving device may be installed at one of a pair of rails 200, other than the rail on which the traveling platform 1 is loaded, the traveling platform 1 is connected to the auxiliary travel device by using a crosslinking member 20, and the auxiliary travel device moves in a longitudinal direction along the rail 200 by means of the driving device so that the traveling platform 1 is driven to move along the rail 200. The auxiliary travel device will be described in detail later.

When the surface roughness measuring apparatus 100 moves in a longitudinal direction along the rail 200, it is required to prevent the surface roughness measuring apparatus 100 from deviating from the rail 200. For this, a lateral anti-moving member for preventing the traveling platform 1 from moving in a lateral direction may be further provided at the traveling platform 1. In the embodiment depicted in Figs. 2 to 8, the lateral anti-moving member includes side contact wheels which rotate in close contact with both sides of the rail 200 in a lateral direction. In particular, in the embodiment depicted in the drawings, the side contact wheels are composed of a fixed side contact wheel 12 whose location is not changed, and a laterally moving side contact wheel 13 whose location is variable according to a width of the rail 200 in a lateral direction. The fixed side contact wheel 12 is installed to the traveling platform 1 so that its location is fixed to be closely adhered to one side surface of the rail 200 in a lateral direction. The laterally moving side contact wheel 13 is also installed to closely contact the other side surface of the rail 200 in the lateral direction, but its location is variable as necessary. If the lateral anti-moving member is composed of the fixed side contact wheel 12 and the laterally moving side contact wheel 13 as described above, by adjusting a location of the laterally moving side contact wheel 13 according to the width of the rail 200 in the lateral direction, the side contact wheels may be always closely adhered to the lateral side surface of the rail 200, and accordingly it is possible to very effectively prevent the surface roughness measuring apparatus 100 from deviating from the rail 200 while running. For reference, in the embodiments depicted in Figs. 2 to 8, the laterally moving side contact wheel 13 is coupled to an arm 130, and the arm 130 is pivotally coupled to the traveling platform 1. When the arm 130 is coupled to the traveling platform 1, the arm 130 is puled toward the rail 200 by means of an elastic member such as a spring, so that the laterally moving side contact wheel 13 is closely adhered to the side surface of the rail 200. However, the lateral anti-moving member is not limited to the embodiment depicted in the drawings.

In order to measure surface roughness of a rail, the cantilever beam 2 is installed at the traveling platform 1. The cantilever beam 2 extends long in a length direction of the rail 200, namely in a longitudinal direction. The cantilever beam 2 may be a plate member extending long in a longitudinal direction. One end (fixed end) of the cantilever beam 2 is firmly fixed to the traveling platform 1. The other end (movable end) of the cantilever beam 2 extends in a longitudinal direction of the rail 200. In the embodiment depicted in Figs. 2 to 8, a first crossing unit 101 located at an interval from the top surface of the rail in a vertical direction is provided at the traveling platform 1. A coupler 11 is provided to extend downwards below the first crossing unit 101. The fixed end of the cantilever beam 2 is coupled to the coupler 11. The first crossing unit 101 is a member for connecting lateral frames located at both sides of the traveling platform 1 in a lateral direction to each other.

The cantilever beam 2 is a member extending in a longitudinal direction, and thus in a state where one end (fixed end) is coupled to the traveling platform 1 and fixed, the cantilever beam 2 is disposed in parallel to the rail 200 to face the top surface of the rail 200 at a regular interval from the rail 200 in a vertical direction. Therefore, the other end (movable end) of the cantilever beam 2 is in a displaceable state in the vertical direction (in a direction perpendicular to the top surface of the rail).

At the movable end of the cantilever beam 2, a contact member 3 is integrally provided to a lower surface of the cantilever beam 2. The lower surface of the contact member 3 is in contact with an upper surface of the rail 200, namely the top surface of the rail 200. While the traveling platform 1 is moving in a longitudinal direction along the rail 200, the lower surface of the contact member 3 always keeps contacting the top surface of the rail 200. Therefore, if the top surface of the rail 200 has irregularities, the contact member 3 moves vertically due to the irregularities.

At the movable end of the cantilever beam 2, the acceleration sensor 4 is provided at a side opposite to a portion where the contact member 3 is coupled. In other words, the acceleration sensor 4 is provided on the top surface of the cantilever beam 2 in a direction opposite to the contact member 3 in a vertical direction, at the movable end of the cantilever beam 2. Therefore, at the movable end of the cantilever beam 2, the acceleration sensor 4 is located on the upper surface of the cantilever beam 2, and the contact member 3 is located on the lower surface of the cantilever beam 2. The contact member 3 vertically moves due to the irregularities of the top surface of the rail 200, and accordingly the movable end of the cantilever beam 2 also moves vertically. At this time, the acceleration sensor 4 measures vertical acceleration due to vertical movement of the contact member 3, namely vertical acceleration due to vertical movement of the movable end of the cantilever beam 2.

The surface roughness measuring apparatus 100 according to the present disclosure further includes the displacement sensor 5, in addition to the acceleration sensor 4 mounted to the cantilever beam 2 as described above. The displacement sensor 5 is connected to the traveling platform 1. The displacement sensor 5 contacts the top surface of the rail 200 and measures vertical displacement according to surface roughness of the rail 200. Therefore, the surface roughness measuring apparatus 100 according to the present disclosure may measure vertical displacement according to roughness of the surface (top surface) of the rail 200 and simultaneously measure surface roughness by using the vertical displacement.

A lower end of the displacement sensor 5 comes into contact with the top surface of the rail 200. Therefore, the displacement sensor 5 measures displacement in a vertical direction, namely vertical displacement, which is generated by surface roughness of the rail 200 while the traveling platform 1 is moving. The displacement sensor 5 is located adjacent to the acceleration sensor 4 in a longitudinal direction. As in the embodiment depicted in the drawings, a plurality of displacement sensors 5 are arranged in a row to form a "displacement sensor set", which is provided to the traveling platform 1. In particular, the displacement sensor set is installed to be rotatable with respect to the traveling platform 1. Therefore, the row of the displacement sensors 5 may be identical to the longitudinal direction or inclined with a predetermined angle in a direction parallel to the longitudinal direction.

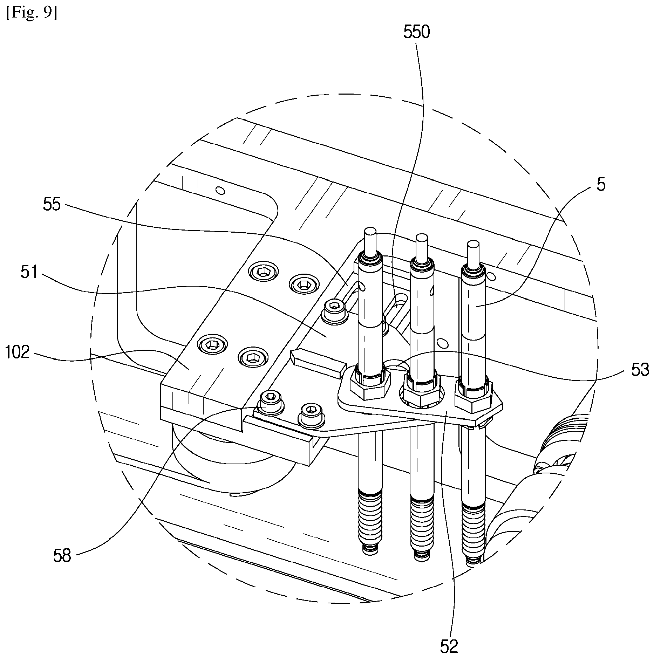

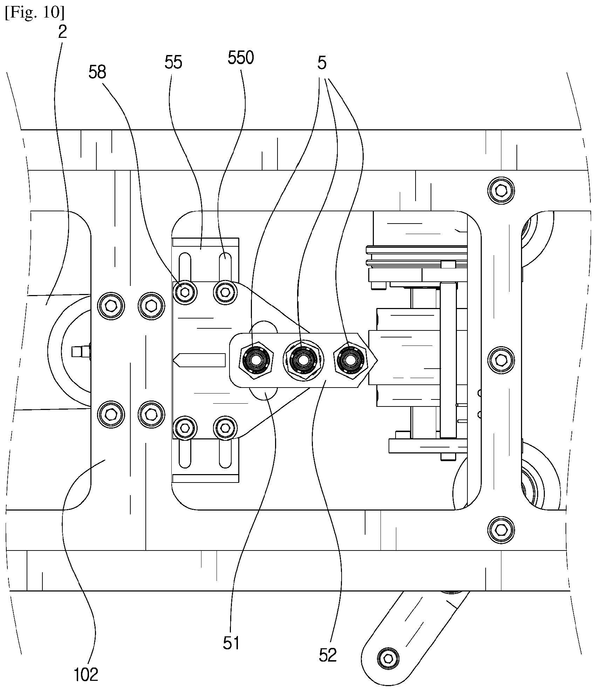

Fig. 9 is an enlarged perspective view schematically showing circular portion A of Fig. 5, to illustrate installation of the displacement sensor 5. Figs. 10 to 14 are plane views schematically showing circular portion B of Fig. 2, observed downwards, which illustrates the change of a rotation location of the displacement sensor set.

In the present disclosure, one displacement sensor 5 may be provided. However, as described above, a plurality of displacement sensors 5 having a rod shape may be arranged in a row to form a single "displacement sensor set?. For this, as shown in the figures, at a single coupling plate 52 in which a plurality of through holes is formed in a row, a plurality of displacement sensors 5 may be vertically inserted into the through holes of the coupling plate 52, so that the plurality of displacement sensors 5 are arranged in a row at intervals and coupled to the coupling plate 52 to form a single displacement sensor set.

The displacement sensor set is rotatably coupled to the traveling platform 1 so that the direction of the row of displacement sensors may be changed. For reference, "the direction of the row of a plurality of displacement sensors in the displacement sensor set" is called an "arrangement direction of displacement sensors" herein.

In the present disclosure, the displacement sensor set may be installed to the traveling platform 1 to be movable in a lateral direction.

For the displacement sensor set to rotate to change an arrangement direction of displacement sensors, the embodiment depicted in the drawings is configured as follows. A horizontally installed plate 51 is provided at the traveling platform 1 to be disposed parallel to the top surface of the rail 200 and face the top surface of the rail 200 with a vertical interval. The displacement sensor set is coupled to be rotatable with respect to the horizontally installed plate 51 (see Figs. 9 to 12). In other words, the displacement sensor set is rotatably coupled to the horizontally installed plate 51 so that an arrangement direction of the displacement sensor set is inclined to have a predetermined angle from the longitudinal direction on a horizontal plane (so that an angle is provided between the arrangement direction of the displacement sensor set and the longitudinal direction).

Further, the horizontally installed plate 51 is coupled to the traveling platform 1 to be movable in a lateral direction, so that the displacement sensor set may move in a lateral direction to change its location. In the embodiment depicted in the drawings, a second crossing unit 102 located at an interval in a vertical direction from the top surface of the rail is provided at the traveling platform 1. The second crossing unit 102 has a fixed plate 55. Therefore, the horizontally installed plate 51 is assembled to change its location with respect to the fixed plate 55 in a lateral direction. The second crossing unit 102 also connects the lateral frame present at both sides of the traveling platform 1 in a lateral direction.

The second crossing unit 102 has the fixed plate 55. The fixed plate 55 has a lateral movement slot 550 having an elongated hole shape extending in a lateral direction. In a state where the horizontally installed plate 51 is overlapped on the lateral movement slot 550 of the fixed plate 55, a coupling member 58 such as a bolt is coupled through the lateral movement slot 550 of the fixed plate 55 and the horizontally installed plate 51 so that the fixed plate 55 is assembled to the horizontally installed plate 51. Therefore, in a state where the coupling member 58 is provided through the horizontally installed plate 51 and the lateral movement slot 550 of the fixed plate 55 but is not yet coupled thereto, the coupling member 58 moves along the lateral movement slot 550 to move the horizontally installed plate 51 in a lateral direction, and then the coupling member 58 is firmly coupled thereto, so that the horizontally installed plate 51 is fixed to a desired location in a lateral direction. By using the above configuration, the displacement sensor set may be horizontally moved in a lateral direction on the top surface of the rail 200 and disposed at a desired location, and thus displacement caused by surface roughness of the rail 200 may be easily measured at a specific location on the top surface of the rail 200.

In order to change the arrangement direction of displacement sensors, the displacement sensor set is rotatably installed to the horizontally installed plate 51. For this, among the plurality of displacement sensors 5 of the displacement sensor set arranged in a row, one of displacement sensors located in middle locations, except for displacement sensors located at both outermost locations, is coupled to be rotatable with respect to the horizontally installed plate 51. In the embodiment depicted in the drawings, a coupling hole is formed through the horizontally installed plate 51. In addition, among the plurality of displacement sensors 5 of the displacement sensor, one of displacement sensors except for displacement sensors located at both outermost locations is vertically inserted into the coupling hole of the horizontally installed plate 51. Therefore, the displacement sensor set including the plurality of displacement sensors 5 is assembled to the horizontally installed plate 51 so that the arrangement direction of displacement sensors is variable. The displacement sensor vertically inserted into the coupling hole formed in the horizontally installed plate 51 also serves as a rotary shaft on which the displacement sensor set may rotate, and thus this is also called a "rotation center displacement sensor" for convenience.

A rotation slot 53 is further formed through the horizontally installed plate 51 in addition to the coupling hole. The rotation slot 53 is formed over an angle range within which the displacement sensor set is rotatable. A displacement sensor adjacent to the rotation center displacement sensor in one direction is inserted through the rotation slot 53.

In the embodiment depicted in the drawings, three displacement sensors 5 are arranged in a row by the coupling plate 52 to configure a displacement sensor set. In addition, among three displacement sensors 5, the displacement sensor located at the center is coupled through the coupling hole of the horizontally installed plate 51 to serve as a "rotation center displacement sensor?. The displacement sensor adjacent to the rotation center displacement sensor, namely an outermost displacement sensor in one direction, is inserted into the rotation slot 53 of the horizontally installed plate 51. Therefore, the displacement sensor set may rotate based on the displacement sensor located at the center through the horizontally installed plate 51. After the displacement sensor set is rotated to a desired location, the rotation center displacement sensor is fixed by using a nut member or the like provided at the rotation center displacement sensor not to rotate further, and accordingly the displacement sensor set does not change its location. The displacement sensor set including three displacement sensors 5 as above is just an embodiment of the present disclosure, and in the present disclosure, the displacement sensor set may be configured to have at least two displacement sensors 5.

As shown in Fig. 10, in the displacement sensor set, the arrangement direction of displacement sensors may be identical to the longitudinal direction of the rail 200. In this case, when the surface roughness measuring apparatus 100 moves in a longitudinal direction along the rail 200, all of the plurality of displacement sensors 5 are located at the same location of the rail 200 in a longitudinal direction to measure vertical displacement caused by surface roughness of the rail 200. Therefore, a plurality of measurement data may be obtained at the same location of the rail 200. If the number of measurement data at the same location is greater, accuracy and reliability of the measurement results are enhanced as much. In addition, external noise included in the measurement data may be easily filtered. In particular, even though some of the plurality of displacement sensors 5 have been broken or the measurement data from some of the plurality of displacement sensors 5 are inaccurate, the surface roughness of the rail may be figured out by using measurement data obtained by other displacement sensors.

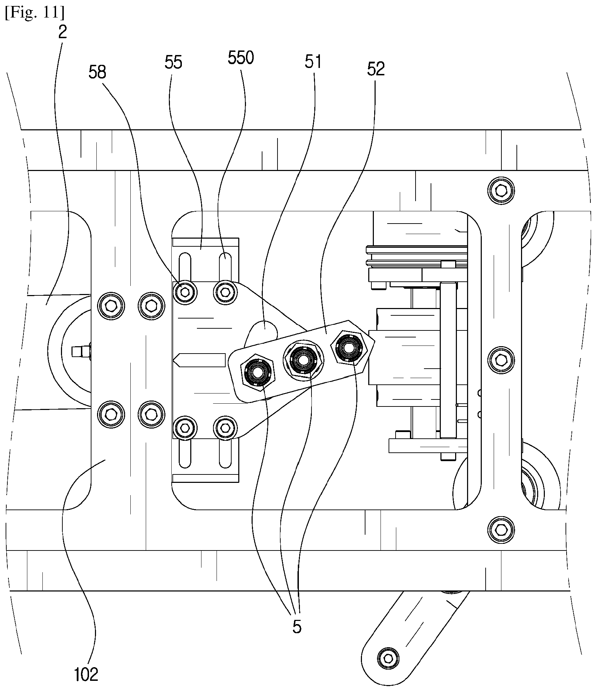

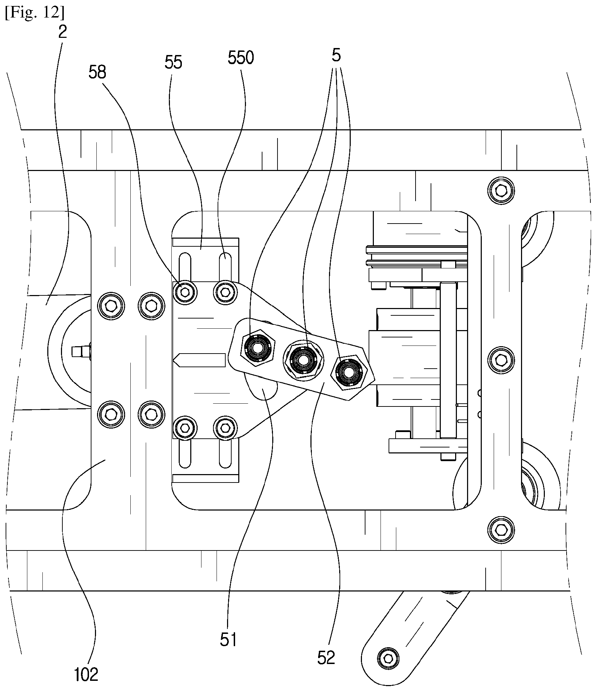

If the displacement sensor set is rotatable as described above, as shown in Figs. 11 and 12, the displacement sensor set may be inclined with a predetermined angle with respect to the center line of the rail 200. In other words, the arrangement direction of the displacement sensor set is included to have a predetermined angle on a horizontal plane from the longitudinal direction. In this case, in a state where the plurality of displacement sensors 5 of the displacement sensor set are in contact with the top surface of the rail at different locations of the rail 200 in a lateral direction, the surface roughness measuring apparatus 100 moves in a longitudinal direction along the rail 200. Accordingly, the vertical displacement according to the surface roughness of the rail may be measured at the same time at various locations of the rail surface.

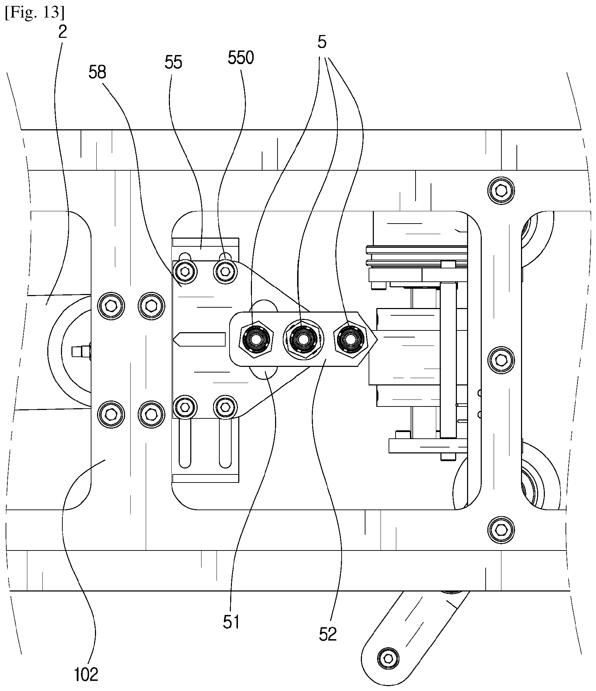

If the displacement sensor set is also movable in a lateral direction, as shown in Fig. 10, the arrangement direction of displacement sensors of the displacement sensor set may be identical to the center line of the rail 200, but the displacement sensor set may also move in a lateral direction so that the arrangement direction of displacement sensors is parallel to the center line of the rail 200 but is inclined by a certain deviation in a lateral direction as shown in Fig. 13. By moving the displacement sensor set in a lateral direction so that the arrangement direction of displacement sensors is identical to the longitudinal direction of the rail as described above, measurement data are obtained at the same location by the plurality of displacement sensors, and as described above in relation to Fig. 10, it is possible to remove noise from the measurement data and improve reliability and accuracy.

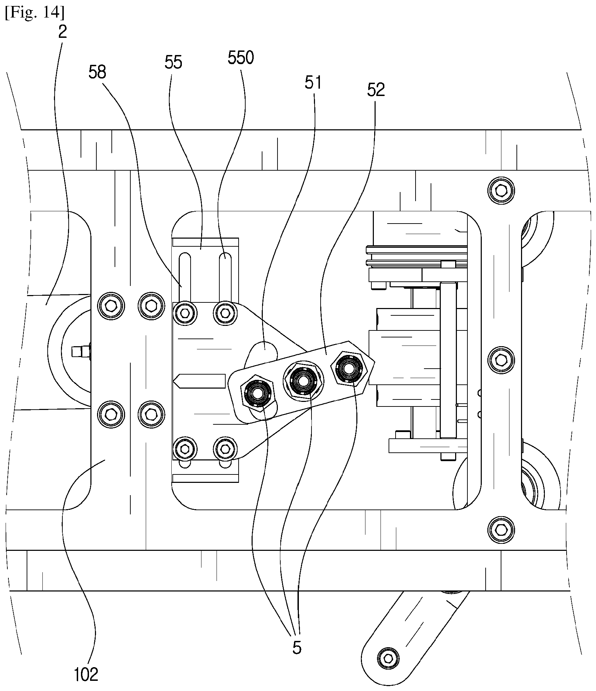

In addition, as shown in Fig. 14, in the displacement sensor set, the arrangement direction of displacement sensors may have a certain deviation in a lateral direction from the center line of the rail 200 and may also be inclined to have a predetermined angle with respect to the center line of the rail 200. In this case, as described above in relation to Fig. 12, vertical displacement according to the surface roughness of a rail may be measured at various locations of the rail surface.

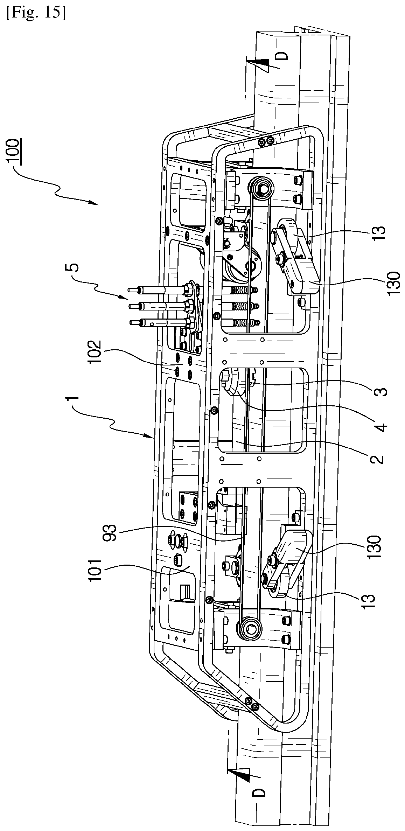

A process of measuring surface roughness of the rail 200 by using the surface roughness measuring apparatus 100 according to the present disclosure will be described with reference to Figs. 15 to 17.

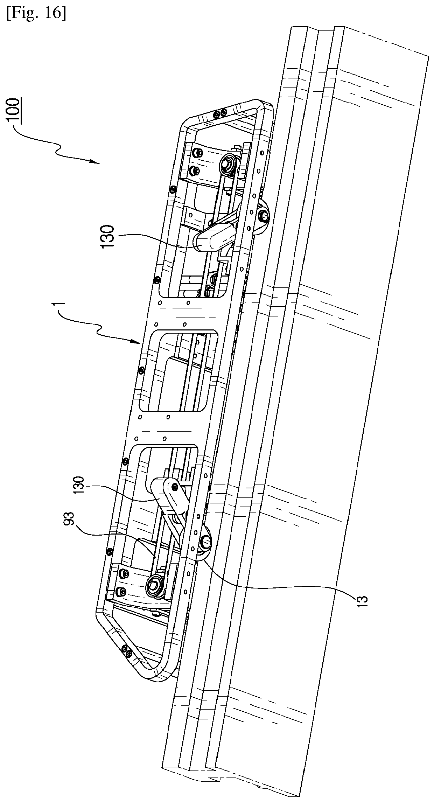

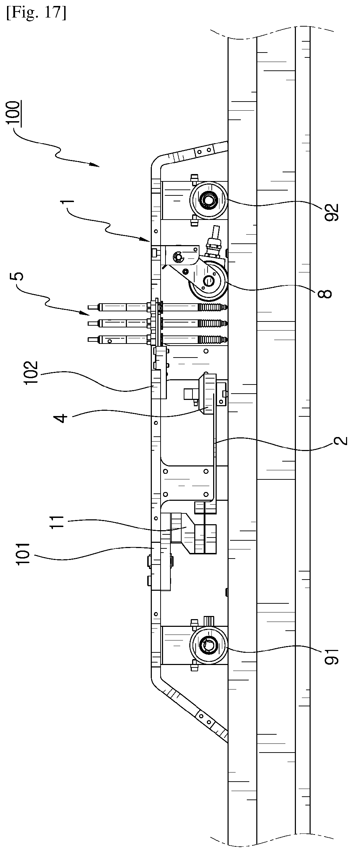

Figs. 15 and 16 are respectively perspective views schematically showing that the surface roughness measuring apparatus 100 according to the present disclosure installed at the rail 200, observed in different directions. Fig. 17 is a lateral sectional view, taken along the line D-D of Fig. 15. For convenience, in Fig. 17, the rail 200 is not depicted in a sectional view.

As shown in the figures, the traveling platform 1 is installed to be loaded on the rail 200. The traveling platform 1 includes the acceleration sensor 4, the contact member 3, the cantilever beam 2 and the displacement sensor 5. In this case, the cantilever beam 2 is located to face the top surface of the rail 200 to extend in a longitudinal direction, and a pressing force is applied to the contact member 3 due to the weight of the contact member 3 and the weight of the acceleration sensor 4 located right above the contact member 3, so that the lower portion of the contact member 3 is always in contact with the top surface of the rail 200. In particular, while the traveling platform 1 is moving along the rail 200, the lower portion of the contact member 3 keeps in contact with the top surface of the rail 200. In a state where the contact member 3 is in contact with the top surface of the rail 200, if the contact member 3 encounters irregularities present on the top surface of the rail 200, the contact member 3 moves upwards and downwards in a vertical direction according to the irregularities, and the acceleration sensor 4 measures acceleration with respect to the vertical movement of the contact member 3.

If the acceleration measured by the acceleration sensor 4 is mathematically calculated, a vertical distance by which the contact member 3 moves in a vertical direction, namely a vertical displacement of the contact member 3, may be calculated, and accordingly the degree of roughness of the surface of the rail 200, namely surface roughness of the rail, may be obtained. In a mathematical aspect, if the measured acceleration is integrated, a speed is obtained, and this is integrated once more, a displacement is obtained. Thus, a mathematical operation for substituting acceleration of an article into a displacement of the article is already well known in the art and thus not described in detail here.

In the surface roughness measuring apparatus 100 according to the present disclosure, the contact member 3 directly contacting the surface of the rail 200 is provided at the movable end of the cantilever beam 2 as described above, and thus, even though a vertical vibration is generated at the traveling platform 1 while the surface roughness measuring apparatus 100 is moving along the rail 200, the vibration of the traveling platform 1 just causes only the fixed end of the cantilever beam 2 to vertically vibrate together with the traveling platform 1, and the vibration of the traveling platform 1 is not directly transferred to the contact member 3. In other words, in the present disclosure, even though vertical vibration or displacement is generated in a vertical direction having no relation with the surface roughness of the rail while the surface roughness measuring apparatus 100 is moving along the rail 200, the vertical vibration and resultant vertical displacement having no relation with the surface roughness of the rail are not directly transferred to the contact member 3. Therefore, while the acceleration sensor 4 measures signals, it is possible to prevent a noise signal generated due to any reason having no relation with the surface roughness of the rail from being included in measurement results.

The contact member 3 may be made of a stationary member (for example, a fixed ball) or a rolling member (for example, a rolling ball, a roller or the like) rolling on the surface of the rail according to the movement of the surface roughness measuring apparatus. If the surface roughness measuring apparatus 100 travels at a low speed, the contact member 3 may be made of a member having no motion such as rotation or rolling, but if the surface roughness measuring apparatus 100 travels at a middle or high speed, the contact member 3 may be made of a rolling member such as a rolling ball or a roller which rolls in contact with the surface of the rail, which minimizes the contact member and improves accuracy during middle- or high-speed travel. However, the configuration of the contact member 3 is not limited thereto.

In the surface roughness measuring apparatus 100, the acceleration caused by vertical movement of the contact member 3 is measured by the acceleration sensor 4. The acceleration sensor 4 detects a variation of acceleration generated during a measurement period. In the present disclosure, the acceleration sensor 4 does not use the location of the surface roughness measuring apparatus 100 as a datum point for measurement, and thus even though the surface roughness measuring apparatus 100 is shaken or vibrated, the acceleration measured by the acceleration sensor 4 just reflects only an acceleration variation in a vertical direction, caused by roughness of the rail surface. As described above, in the present disclosure, acceleration of a vertical movement of the contact member 3 caused by roughness of the rail surface is measured by the acceleration sensor 4, and a displacement is calculated using the measured acceleration signal. Therefore, different from the technique where a displacement is directly measured, the present disclosure ensures accurate measurement of the surface roughness of a rail without any noise or error caused by vibration or the like. In other words, if the surface roughness of a rail is measured using the surface roughness measuring apparatus 100 according to the present disclosure, the surface roughness of a rail may be measured with very excellent accuracy and reliability in a necessary period, during movement along the rail 200.

When the surface roughness measuring apparatus 100 is installed at the rail 200, the lower end of the displacement sensor 5 also comes into contact with the top surface of the rail 200. In a state where the displacement sensor 5 is in contact with the rail 200 as described above, a vertical displacement generated in a vertical direction due to the irregularities of the rail surface while the traveling platform 1 is moving along the rail 200 is measured by the displacement sensor 5, and the surface roughness of the rail is calculated from the measurement signal of the vertical displacement measured as above. A mathematical operation for calculating surface roughness from the vertical displacement measured by the displacement sensor 5 is also already well known in the art and thus not described in detail here.

In the present disclosure, the displacement sensor 5 is further provided in addition to the acceleration sensor 4, and the displacement sensor 5 in contact with the surface of the rail 200 directly measures a displacement caused by vertical movement due to unevenness of the rail surface, in addition to the above rail surface roughness measuring process. Therefore, the surface roughness of a rail measured by the surface roughness measuring apparatus 100 according to the present disclosure has more excellent reliability and accuracy.

When the surface roughness measuring apparatus 100 according to the present disclosure is configured, data measured by the acceleration sensor 4 may be transferred to a remote place in real time so that the surface roughness of a rail is calculated at the remote place. For this, a wireless transmission device (not shown) may be further provided to the traveling platform 1.

The surface roughness measuring apparatus 100 according to the present disclosure may be configured to move along the rail 200 just by the traveling platform 1, but if necessary, an auxiliary travel device 10 may be further provided. If the surface roughness measuring apparatus 100 further includes the auxiliary travel device 10, the traveling platform 1 may travel along the rail 200 more stably without deviating or separating from the rail 200.

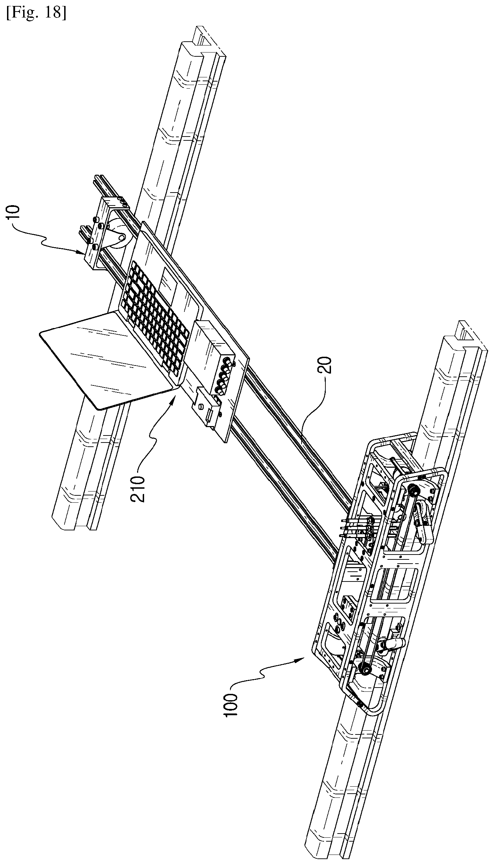

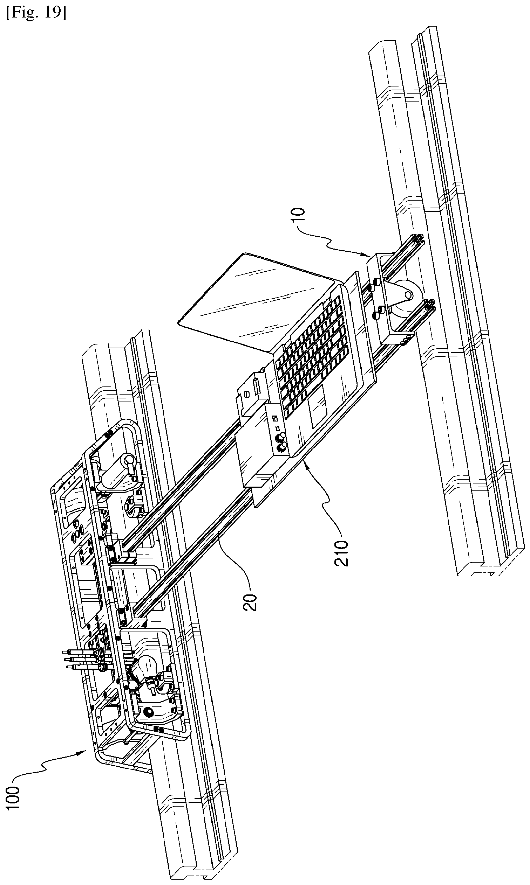

Figs. 18 and 19 are perspective views schematically showing that a surface roughness measuring apparatus 100 according to another embodiment of the present disclosure, which further includes an auxiliary travel device 10, is installed at the rail 200, observed in different directions.

In the embodiment depicted in Figs. 18 and 19, the auxiliary travel device 10 is installed at one of a par of rails 200, where the traveling platform 1 is not installed. A crosslinking member 20 is disposed between the traveling platform 1 and the auxiliary travel device 10, and the crosslinking member 20 is integrally coupled to the auxiliary travel device 10 and the traveling platform 1.

The auxiliary travel device 10 moves in a longitudinal direction along the rail 200. Similar to the traveling platform 1, the auxiliary travel device 10 may include a platform member and a wheel member rolling in contact with the top surface of the rail 200. Further, though not shown in the figures, the auxiliary travel device 10 may further include a lateral anti-moving member for preventing the auxiliary travel device 10 from deviating from the rail 200 while running.

The surface roughness measuring apparatus 100 according to the present disclosure may be configured to be movable by itself along the rail 200 by using the driving force of the traveling platform 1. However, if the auxiliary travel device 10 is further provided to the surface roughness measuring apparatus 100 as in this embodiment, the auxiliary travel device 10 may generate a driving force for movement along the rail, and the traveling platform 1 may be driven to move along the rail 200 according to the travel of the auxiliary travel device 10. In other words, though not shown in the figures, the wheel member provided at the auxiliary travel device 10 may be used as a driving wheel, and a driving device such as a motor for driving the driving wheel may be installed at the auxiliary travel device 10. In this case, if the auxiliary travel device 10 having the driving device and the driving wheel runs by itself on the rail 200, the traveling platform 1 located on the other rail moves along the other rail together with the auxiliary travel device 10. If the auxiliary travel device 10 is configured to run on the rail 200 by itself, the driving device 81 for driving the driving wheel 8 at the traveling platform 1 may be excluded. If necessary, a travel distance measurer for measuring a travel distance may be provided at the auxiliary travel device 10.

If the crosslinking member 20 and the auxiliary travel device 10 are provided, as shown in Fig. 13, a controlling/monitoring device 210 for controlling operations of the surface roughness measuring apparatus 100 or allowing a manager to monitor the operations may be further installed at the crosslinking member 20.

If the traveling platform 1 and the auxiliary travel device 10 are connected by the crosslinking member 20, since two components move together along a pair of rails, the surface roughness measuring apparatus may move along the rail more stably.

## Claims

1. An apparatus for measuring surface roughness of a rail, comprising:
a traveling platform (1) configured to move in a longitudinal direction along a rail (200);
a cantilever beam (2) having a fixed end fixed to the traveling platform and a movable end extending in the longitudinal direction;
a contact member (3) provided at the movable end of the cantilever beam (2) to make contact with a top surface of the rail (200);
an acceleration sensor (4) provided at the movable end of the cantilever beam (2) to measure vertical acceleration of the contact member (3) generated by irregularities of a top surface of the rail (200); and
a displacement sensor (5) configured to contact the top surface of the rail (200) to measure vertical displacement caused by the irregularities of the top surface of the rail (200) while the apparatus is running along the rail (200),
wherein the cantilever beam (2) is located to face the top surface of the rail (200), the contact member (3) and the displacement sensor (5) move along the rail (200) in contact with the top surface of the rail (200), and surface roughness of the rail (200) is measured from an acceleration signal measured by the acceleration sensor (4) and a vertical displacement measurement signal measured by the displacement sensor (5),
wherein a plurality of displacement sensors (5) is arranged in a row to configure a displacement sensor set, and the displacement sensor set is rotatably provided at the traveling platform (1) so that the displacement sensors (5) are arranged with an angle with respect to a longitudinal direction of the center of the rail (200),
wherein a horizontally installed plate (51) is provided at the traveling platform (1),
wherein a coupling hole and a rotation slot (53) are formed through the horizontally installed plate (51),
wherein one of the plurality of displacement sensors (5) of the displacement sensor set, arranged in a row, corresponds to a rotation center displacement sensor which is coupled through the coupling hole of the horizontally installed plate (51), and
wherein in the displacement sensor set, a displacement sensor adjacent to the rotation center displacement sensor is inserted through the rotation slot (53) so that the displacement sensor set is coupled to be rotatable with respect to the horizontally installed plate (51).

2. The apparatus for measuring surface roughness of a rail according to claim 1,
wherein the displacement sensor set is coupled to the traveling platform (1) to change a location thereof in a lateral direction.

3. The apparatus for measuring surface roughness of a rail according to claim 2,
wherein second crossing units (102) are provided to the traveling platform (1) at intervals in a direction perpendicular to the top surface of the rail (200),
wherein a fixed plate (55) is provided at the second crossing unit (102),
wherein a lateral movement slot (550) extending in a lateral direction is formed in the fixed plate (55), and
wherein in a state where the horizontally installed plate (51) is overlapped with the lateral movement slot (550) of the fixed plate (55), the coupling member (58) is coupled through the lateral movement slot (550) and the horizontally installed plate (51), so that the horizontally installed plate (51) is assembled to be movable in a lateral direction with respect to the fixed plate (55).

4. The apparatus for measuring surface roughness of a rail according to claim 1,
wherein the traveling platform (1) has a driving device, so that the
traveling platform (1) moves by itself along the rail by means of the driving device.

5. The apparatus for measuring surface roughness of a rail according to claim 1, further comprising:
an auxiliary travel device (10) installed at one of a pair of rails, at which the traveling platform (1) is not loaded; and
a crosslinking member (20) disposed between the auxiliary travel device (10) and the traveling platform (1) to integrally couple the auxiliary travel device (10) and the traveling platform (1),
wherein the traveling platform (1) and the auxiliary travel device (10) move together along the rails.

6. The apparatus for measuring surface roughness of a rail according to claim 5,
wherein the auxiliary travel device (10) includes a driving wheel and a driving device for driving the driving wheel, and
wherein the auxiliary travel device (10)moves by itself along the rail, so that the traveling platform (1) moves along the rail by means of the auxiliary travel device (10).

## Patentansprüche

1. Vorrichtung zur Messung der Oberflächenrauhigkeit einer Schiene, folgendes umfassend:
eine verfahrbare Plattform (1), die zur Bewegung in Längsrichtung entlang einer Schiene (200) konfiguriert ist;
einen Auslegerarm (2) mit einem festen Ende, das an der verfahrbaren Plattform befestigt ist, und einem beweglichen Ende, das sich in Längsrichtung erstreckt;
ein Kontaktelement (3), das am beweglichen Ende des Auslegerarms (2) vorgesehen ist, um Kontakt mit einer Oberseite der Schiene (200) herzustellen;
einen Beschleunigungssensor (4), der am beweglichen Ende des Auslegerarms (2) vorgesehen ist, um die vertikale Beschleunigung des Kontaktelements (3) zu messen, die durch Unregelmäßigkeiten an einer Oberseite der Schiene (200) erzeugt wird; und
einen Wegsensor (5), der derart konfiguriert ist, dass er die Oberseite der Schiene (200) kontaktiert, um eine vertikale Verschiebung zu messen, die durch die Unregelmäßigkeiten an der Oberseite der Schiene (200) verursacht wird, während die Vorrichtung die Schiene (200) abfährt,
wobei der Auslegerarm (2) derart angeordnet ist, dass er der Oberseite der Schiene (200) zugewandt ist, wobei sich das Kontaktelement (3) und der Wegsensor (5) an der Schiene (200) entlang und dabei in Kontakt mit der Oberseite der Schiene (200) bewegen, und die Oberflächenrauhigkeit der Schiene (200) anhand eines vom Beschleunigungssensor (4) gemessenen Beschleunigungssignals und eines vom Wegsensor (5) gemessenen vertikalen Verschiebungsmesssignals gemessen wird,
wobei eine Vielzahl von Wegsensoren (5) in einer Reihe angeordnet ist, um dadurch einen Wegsensorsatz zu konfigurieren, und der Wegsensorsatz drehbar derart an der verfahrbaren Plattform (1) vorgesehen ist, dass die Wegsensoren (5) in Bezug auf eine Längsrichtung der Mitte der Schiene (200) in einem Winkel angeordnet sind,
wobei eine horizontal montierte Platte (51) an der verfahrbaren Plattform (1) vorgesehen ist,
wobei ein Kopplungsloch und ein Drehschlitz (53) durch die horizontal montierte Platte (51) hindurch gebildet sind,
wobei einer der Vielzahl von Wegsensoren (5) des Wegsensorsatzes, die in einer Reihe angeordnet sind, einem Drehpunkt-Wegsensor entspricht, der durch das Koppelloch der horizontal montierten Platte (51) hindurch gekoppelt ist, und
wobei in dem Wegsensorsatz ein benachbart dem Drehpunkt-Wegsensor befindlicher Wegsensor durch den Drehschlitz (53) hindurch geführt ist, so dass der Wegsensorsatz mit der horizontal montierten Platte (51) drehbar verbunden ist.

2. Vorrichtung zur Messung der Oberflächenrauhigkeit einer Schiene nach Anspruch 1, bei der der Wegsensorsatz mit der verfahrbaren Plattform (1) gekoppelt ist, um eine Positionsänderung dieser in seitlicher Richtung vorzunehmen.

3. Vorrichtung zur Messung der Oberflächenrauhigkeit einer Schiene nach Anspruch 2, bei der zweite Kreuzungseinheiten (102) der verfahrbaren Plattform (1) in Abständen in einer Richtung senkrecht zur Oberseite der Schiene (200) vorgesehen sind,
eine feststehende Platte (55) an der zweiten Kreuzungseinheit (102) vorgesehen ist,
ein sich in seitlicher Richtung erstreckender Seitenbewegungsschlitz (550) in der feststehenden Platte (55) ausgebildet ist, und
in einem Zustand, in dem die horizontal montierte Platte (51) mit dem seitlichen Bewegungsschlitz (550) der feststehenden Platte (55) überlappt ist, das Kopplungselement (58) durch den seitlichen Bewegungsschlitz (550) und die horizontal montierte Platte (51) hindurch derart gekoppelt ist, dass die horizontal montierte Platte (51) in Bezug auf die feststehende Platte in seitlicher Richtung (55) beweglich montiert ist.

4. Vorrichtung zur Messung der Oberflächenrauhigkeit einer Schiene nach Anspruch 1, bei der die verfahrbare Plattform (1) eine Antriebseinrichtung aufweist, so dass sich die verfahrbare Plattform (1) mittels der Antriebseinrichtung von selbst entlang der Schiene bewegt.

5. Vorrichtung zur Messung der Oberflächenrauhigkeit einer Schiene nach Anspruch 1, des Weiteren umfassend:
eine Hilfsfahrvorrichtung (10), die an einer von zwei Schienen angebracht ist, die nicht mit der verfahrbaren Plattform (1) beladen ist; und
ein Querverbindungselement (20), das zwischen der Hilfsfahrvorrichtung (10) und der verfahrbaren Plattform (1) angeordnet ist, um die Hilfsfahrvorrichtung (10) einstückig mit der verfahrbaren Plattform (1) zu verbinden,
wobei sich die verfahrbare Plattform (1) und die Hilfsfahrvorrichtung (10) gemeinsam entlang der Schienen bewegen.

6. Vorrichtung zur Messung der Oberflächenrauhigkeit einer Schiene nach Anspruch 5, bei der die Hilfsfahrvorrichtung (10) ein Antriebsrad und eine Antriebseinrichtung zum Antreiben des Antriebsrades beinhaltet, und
sich die Hilfsfahrvorrichtung (10) von selbst entlang der Schiene bewegt, so dass sich die verfahrbare Plattform (1) mittels der Hilfsfahrvorrichtung (10) entlang der Schiene bewegt.

## Revendications

1. Appareil de mesure de rugosité de surface d'un rail, comprenant :
une plateforme roulante (1) configurée pour se déplacer dans une direction longitudinale le long d'un rail (200) ;
une poutre en porte-à-faux (2) ayant une extrémité fixe fixée à la plateforme roulante et une extrémité mobile s'étendant dans la direction longitudinale ;
un élément de contact (3) fourni au niveau de l'extrémité mobile de la poutre en porte-à-faux (2) pour établir un contact avec une surface supérieure du rail (200) ;
un capteur d'accélération (4) fourni au niveau de l'extrémité mobile de la poutre en porte-à-faux (2) pour mesurer l'accélération verticale de l'élément de contact (3) générée par des irrégularités d'une surface supérieure du rail (200) ; et
un capteur de déplacement (5) configuré pour venir en contact avec la surface supérieure du rail (200) pour mesurer le déplacement vertical provoqué par les irrégularités de la surface supérieure du rail (200) tandis que l'appareil se déplace le long du rail (200),
dans lequel la poutre en porte-à-faux (2) est située pour faire face à la surface supérieure du rail (200), l'élément de contact (3) et le capteur de déplacement (5) se déplacent le long du rail (200) en contact avec la surface supérieure du rail (200), et la rugosité de surface du rail (200) est mesurée à partir d'un signal d'accélération mesuré par le capteur d'accélération (4) et d'un signal de mesure de déplacement vertical mesuré par le capteur de déplacement (5),
dans lequel une pluralité de capteurs de déplacement (5) est agencée en une ligne pour configurer un ensemble de capteurs de déplacement, et l'ensemble de capteurs de déplacement est fourni de manière pivotante au niveau de la plateforme roulante (1) de façon que les capteurs de déplacement (5) soient agencés en formant un angle par rapport à une direction longitudinale du centre du rail (200),
dans lequel une plaque installée horizontalement (51) est fournie au niveau de la plateforme roulante (1),
dans lequel un trou de couplage et une fente de rotation (53) sont formés à travers la plaque installée horizontalement (51),
dans lequel un de la pluralité de capteurs de déplacement (5) de l'ensemble de capteurs de déplacement, agencés en une ligne, correspond à un capteur de déplacement de centre de rotation qui est couplé au moyen du trou de couplage de la plaque installée horizontalement (51), et
dans lequel dans l'ensemble de capteurs de déplacement, un capteur de déplacement adjacent au capteur de déplacement de centre de rotation est inséré à travers la fente de rotation (53) de sorte que l'ensemble de capteurs de déplacement soit couplé pour pouvoir pivoter par rapport à la plaque installée horizontalement (51).

2. Appareil de mesure de rugosité de surface d'un rail selon la revendication 1,
dans lequel l'ensemble de capteurs de déplacement est couplé à la plateforme roulante (1) pour changer un emplacement de celle-ci dans une direction latérale.

3. Appareil de mesure de rugosité de surface d'un rail selon la revendication 2,
dans lequel de secondes unités transversales (102) sont fournies à la plateforme roulante (1) à des intervalles dans une direction perpendiculaire à la surface supérieure du rail (200),
dans lequel une plaque fixe (55) est fournie au niveau de la seconde unité transversale (102),
dans lequel une fente de mouvement latéral (550) s'étendant dans une direction latérale est formée dans la plaque fixe (55), et
dans lequel dans un état où la plaque installée horizontalement (51) est chevauchée par la fente de mouvement latéral (550) de la plaque fixe (55), l'élément de couplage (58) est couplé au moyen de la fente de mouvement latéral (550) et de la plaque installée horizontalement (51), de sorte que la plaque installée horizontalement (51) soit assemblée pour être mobile dans une direction latérale par rapport à la plaque fixe (55).

4. Appareil de mesure de rugosité de surface d'un rail selon la revendication 1,
dans lequel la plateforme roulante (1) présente un dispositif d'entraînement, de sorte que la plateforme roulante (1) se déplace par elle-même le long du rail au moyen du dispositif d'entraînement.

5. Appareil de mesure de rugosité de surface d'un rail selon la revendication 1, comprenant en outre :
un dispositif de déplacement auxiliaire (10) installé au niveau d'un d'une paire de rails, au niveau duquel la plateforme roulante (1) n'est pas chargée ; et
un élément de liaison transversale (20) disposé entre le dispositif de déplacement auxiliaire (10) et la plateforme roulante (1) pour coupler de manière intégrale le dispositif de déplacement auxiliaire (10) et la plateforme roulante (1),
dans lequel la plateforme roulante (1) et le dispositif de déplacement auxiliaire (10) se déplacent ensemble le long des rails.

6. Appareil de mesure de rugosité de surface d'un rail selon la revendication 5,
dans lequel le dispositif de déplacement auxiliaire (10) inclut une roue motrice et un dispositif d'entraînement pour entraîner la roue motrice, et
dans lequel le dispositif de déplacement auxiliaire (10) se déplace par lui-même le long du rail, de sorte que la plateforme roulante (1) se déplace le long du rail au moyen du dispositif de déplacement auxiliaire (10).
